# EUROPÄISCHE PATENTANMELDUNG

(11) **EP 2 312 095 A2**
(43) Veröffentlichungstag der Anmeldung: **20.04.2011**
(21) Anmeldenummer: 10185867.8
(22) Anmeldetag: 01.10.2010
(51) Int. Cl.: E05B 17/20, E05B 65/00, E05B 65/10

(54) **Feder, Rastvorrichtung, Schloss und Falttor**

(30) Priorität: 05.10.2009 DE 102009048307; 01.03.2010 DE 102010009697
(71) Anmelder: Hörmann KG Verkaufsgesellschaft, D-33803 Steinhagen (DE)
(72) Erfinder:
(74) Vertreter: Kastel, Stefan

(57) **Zusammenfassung**

Eine mechanische Feder (90) ist als Vorspannelement für ein Schloss (20, 20', 20a, 20b) ausgebildet und weist einen elastisch verformbaren Bereich zur Aufnahme und/oder Abgabe von kinetischer Energie und/oder zur Speicherung von potentieller Energie auf. Der elastisch verformbare Bereich (102) ist mäanderförmig ausgebildet und weist mäanderförmige Schlingen auf, die sich bei Betätigung eines Drückers (22) zusammenstauchen und durch Entspannen die Schlossnuss (42) des Schlosses (20, 20', 20a, 20b) wieder in ihre ursprüngliche Rastposition zurückbringen.

## Beschreibung

Die Erfindung betrifft eine mechanische Feder, die als Vorspannelement für ein Schloss ausgebildet ist und einen elastisch verformbaren Bereich zur Aufnahme bzw. Abgabe von kinetischer Energie bzw. zur Speicherung von potentieller Energie aufweist. Außerdem betrifft die Erfindung eine mit einer solchen Feder gebildete Rastvorrichtung für ein Schloss, ein mit einer solchen Feder oder Rastvorrichtung versehenes Schloss sowie ein damit versehenes Falttor.

Falttore sind Tore mit wenigstens einem Flügel, der aus mehreren Teilflügeln gebildet ist, die um eine Hochachse zueinander schwenkbar aneinander befestigt sind. Dadurch lässt sich der Flügel zum Öffnen zusammenfalten. Falttore weisen im Allgemeinen Schlösser auf, die eine Verriegelung der Falttore ermöglichen. Diese Schlösser umfassen im Allgemeinen einen Drücker an der Außenseite des Schlosses, mit dem eine Schlossnuss, die sich im Inneren des Schlosses befindet, bewegt werden kann. Die Schlossnuss ist insbesondere dazu vorgesehen, weitere mechanische Elemente wie z.B. einen Schnäpper oder Riegelstangen zu bedienen. Ein Beispiel eines solchen Schlosses ist in der nicht vorveröffentlichten Patentanmeldung 10 2008 054 199.0 offenbart.

Federn, die eine Schlossnuss in die Ausgangslage zurückholen, sind bekannt und bereits vielfältig auf dem Markt angeboten und vertrieben worden. Hierfür werden in der Regel, um den Drücker in seiner horizontalen Lage zu halten bzw. ihn dorthin zurückzuführen, Spiralfedern eingesetzt, die mit dem Außenschenkel die Rückstellkraft auf die Schlossnuss übertragen und sich mit dem Innenschenkel am Gehäuse abstützen.

Weiter sind auch Rastfederelemente, wie beispielsweise Druckfedern mit Kugel, bekannt, die eingesetzt werden, um verschiedene Stellungen eines Drückers einrastend zu halten und zu sichern.

Werden z. B. bei einem Riegelstangenschloss solche Federarten verwendet, benötigen diese dabei viel Platz, um die entsprechenden Funktionen und Rückstellkräfte zu gewährleisten. Dieses wird erschwert, weil die Schlossnuss über Hebel- und Schiebeelemente weitere Riegelbewegungen auslösen muss.

Aufgabe ist es daher, eine Rast- und/oder Rückstellmöglichkeit, insbesondere für ein Betätigungselement eines Schlosses, zu schaffen, die im Vergleich zu bekannten Lösungen platzsparender ist.

Diese Aufgabe wird durch eine mechanische Feder als Vorspannelement für ein Schloss gemäß Anspruch 1 gelöst.

Eine Rastvorrichtung für ein Betätigungselement eines Schlosses wie beispielsweise eine Schlossnuss, sowie ein Schloss für eine Tür oder ein Tor, die die mechanische Feder verwenden, sind Gegenstand der Nebenansprüche.

Ein weiterer nebengeordneter Anspruch betrifft ein Falttor mit einem Schloss, das die mechanische Feder als Rast- und Rückstellelement und/oder die Rastvorrichtung aufweist.

Vorteilhafte Ausgestaltungen der Erfindung sind Gegenstand der Unteransprüche.

Die Erfindung schlägt vorteilhaft eine mechanische Feder vor, die als Vorspannelement für ein Schloss ausgebildet ist. Die mechanische Feder weist vorzugsweise einen elastisch verformbaren Bereich auf, der zur Aufnahme und/oder Abgabe von kinetischer Energie und/oder zur Speicherung von potentieller Energie ausgebildet ist. Dabei ist der elastisch verformbare Bereich vorzugsweise mäanderförmig ausgebildet.

Besonders vorteilhaft ist die mechanische Feder in einer Ebene flach ausgebildet und kann dadurch platzsparend als Rast- und/oder Rückstellelement verwendet werden. Durch die vorteilhafte Ausbildung mit einem mäanderförmigen Bereich kann sie trotz geringem Platzbedarf dennoch leicht auch größere Energien aufnehmen und speichern.

Wird eine solche Feder in einem Schloss verwendet, ist es vorteilhaft möglich, eine Rast- und/oder Rückstellungsmöglichkeit zu schaffen, die platzsparend ist und bei der die Rückstellkräfte vorteilhaft auf dem gesamten Weg, den ein Drücker zurücklegt, wirken. Weiter sind entsprechende Rastkräfte in den Endstellungen, die der Drücker einnimmt, vorhanden.

Eine Raststellung des Drückers ist beispielsweise vorteilhaft, wenn das Schloss bei bestimmten Stellungen, z.B. bei horizontaler oder vertikaler Stellung, des Drückers ausgeführte Funktionen aufweist, insbesondere wenn es beispielsweise verriegelbar oder entriegelbar ist, wie es bei einem sog. Basquilleverschluss der Fall ist. Diese Funktionen lassen sich durch die erfindungsgemäße Federart vorteilhaft erzielen.

Vorzugsweise weist der mäanderförmige, verformbare Bereich wenigstens zwei mäanderförmige Schlingen auf, die in einer Ebene ausgerichtet sind. Der Querschnitt der Feder kann vorteilhaft beliebig gewählt werden. Vorzugsweise weisen die Schlingen einen oberen Wendepunkt, einen unteren Wendepunkt und einen Scheitelpunkt dazwischen auf, um so einen gleichmäßigen Übergang zwischen den Schlingen zu realisieren.

Um einen besonders platzsparenden Aufbau zu realisieren, ist es vorteilhaft, wenn die Feder als Flachfeder ausgebildet ist.

Vorzugsweise weist die Feder einen ersten Endbereich und einen zweiten Endbereich auf, die zum Abstützen der Feder vorgesehen sind und die vorteilhaft jeweils wenigstens eine Schlaufenumbiegung aufweisen.

Durch eine Schlaufenumbiegung kann die auf die Feder ausgeübte Kraft vorteilhaft über eine größere Fläche verteilt übertragen werden, was das Abstützen der Feder wesentlich erleichtert.

Vorzugsweise ist zwischen wenigstens einem Endbereich der Feder und dem mäanderförmigen Bereich ein geradliniger Übergangsbereich vorgesehen. Der geradlinige Übergangsbereich ist vorteilhaft derart an der wenigstens einen Schlaufenumbiegung angeordnet, dass eine Kraft, die auf die Schlaufenumbiegung eingebracht wird, vorteilhaft über einen kurzen Weg auf den mäanderförmig verformbaren Bereich übertragen wird.

Vorzugsweise ist die Feder zwischen dem geradlinigen Übergangsbereich und dem zu diesem zugeordneten Endbereich abgebogen ausgebildet. So kann sich der geradlinige Übergangsbereich bei Einbringen einer Kraft in Richtung des mäanderförmig verformbaren Bereiches hinbewegen und so eine Vorspannung der Feder auslösen.

Vorteilhaft ist eine Rastvorrichtung an einem Betätigungselement eines Schlosses wie einer Schlossnuss vorgesehen, die eine Feder mit einem mäanderförmig verformbaren Bereich aufweist. Die Feder hält vorteilhaft das Betätigungselement in seiner Raststellung oder stellt eine Rückstellkraft zur Verfügung, die das Betätigungselement in seine Raststellung zurückbringt, wenn es zuvor aus dieser ausgelenkt worden ist. In besonders bevorzugter Ausgestaltung dient die Feder sowohl zum Halten in der Raststellung als auch zum Bereiststellen der Rückstellkraft.

Bei einer bevorzugten Ausgestaltung der Rastvorrichtung mit der mechanischen Feder kann vorteilhaft das Betätigungselement des Schlosses in wenigstens einer Stellung einrasten, besonders bevorzugt in wenigstens zwei Stellungen.

Weiter vorteilhaft ist das Betätigungselement als drehbare Schlossnuss ausgebildet, und die Feder dient vorzugsweise zum Erzeugen von Rückstellkräften und/oder zum Erzeugen von Rastkräften für die Schlossnuss. Wird ein Türdrücker, der an der Schlossnuss befestigt ist, betätigt, ergibt sich durch das Einbringen der Kraft eine Spannung auf der Feder, die nach Loslassen des Drückers eine Rückstellkraft auf die Schlossnuss ausübt. Die Schlossnuss wird sodann durch die Rückstellkraft in eine der wenigstens zwei Raststellungen gebracht. Weiter hält die Feder vorteilhaft die Schlossnuss in den Raststellungen und verhindert, dass die Schlossnuss aus ihrer Raststellung herausspringt.

Vorzugsweise ist die Feder mit einem ersten Endbereich an der Schlossnuss abgestützt und greift mit einem zweiten Endbereich an einem ortsfesten Abstützelement an. Durch die Abstützelemente wird die Feder in ihrer vorgesehenen Position gehalten und eine Vorspannung auf die Feder ausgeübt. Damit wird verhindert, dass die Feder ihre vorgesehene Position verlässt und nicht mehr als Rast- und/oder Rückstellelement für die Schlossnuss zur Verfügung steht.

Vorteilhaft sind wenigstens eine pfannenähnlich ausgebildete Fläche und/oder wenigstens eine taschenförmige Ausnehmung vorgesehen, die als Federsitz zum Abstützen wenigstens eines der Endbereiche der Feder vorgesehen ist. Mit einer solchen Ausnehmung ist es möglich, die Federenden lagerichtig anzuordnen und das Ausbrechen sowie das Aufbäumen des Federkörpers zu verhindern.

Vorzugsweise ist die Schlossnuss entgegen der Vorspannung der Feder zwischen zwei durch Begrenzungseinrichtungen definierten Endstellungen drehbar. Zwischen den beiden definierten Endstellungen ist die Schlossnuss vorzugsweise über einen durch eine maximale Spannung der Feder geschaffenen Todpunkt hinweg zu bewegen. Es ist ein vorzugsweise maximaler Drehweg von 180° erreichbar, wobei der Drehweg die Drückerlage vorgibt. Wenigstens ein Endbereich der Feder ist beweglich und wird durch die Schlossnuss angelenkt und erzeugt durch den vorgespannten Einbau auf die Schlossnuss und/oder den Drücker ein Rückstellelement.

Wird die Schlossnuss über den Drücker von der ersten in die zweite Stellung gedreht, dann wird die Flachfeder über den Drehweg bis zum Todpunkt maximal gespannt und über den Todpunkt hinaus wieder teilweise entspannt.

Um auf die Schlossnuss bzw. den Drücker ein Rückstellmoment zu erzeugen, ist die Feder vorteilhaft als Druckfeder auf Druck vorgespannt in das Schloss eingebaut. Somit erzeugt die vorgespannte Feder in beiden Raststellungen ein Rückstellmoment.

Vorzugsweise ist ein Falttor mit vorteilhaft wenigstens einem Falttorflügel vorgesehen, der vorzugsweise wenigstens zwei aneinander schwenkbar angelenkte Flügelelemente aufweist und vorteilhaft ein Schloss umfasst, das besonders bevorzugt die mechanische Feder mit dem mäanderförmig verformbaren Bereich aufweist.

Ausführungsbeispiele der Erfindung werden nachfolgend anhand der beigefügten Zeichnung näher erläutert. Darin zeigt:
- Fig. 1: eine schematische Darstellung eines Falttores mit mehreren Faltflügeln, die jeweils mit einem Schloss zur Verriegelung versehen sind;
- Fig. 2: eine teilweise weggeschnittene Draufsicht auf eine rein zu Erläuterungszwecken dargestellte und nicht von der Erfindung umfasste Ausführung für das Schloss von Fig. 1, das als Riegelstangenschloss ausgebildet ist;
- Fig. 3: eine teilweise weggeschnittene Draufsicht auf eine weitere rein zu Erläuterungszwecken dargestellte und nicht von der Erfindung umfasste Ausführung für das Schloss von Fig. 1, wobei die beiden Ausführungen von Fig. 2 und 3 Teile eines Schlosssystems zur Anpassung an unterschiedliche Schließzylindertypen sind;

- Fig. 4: eine vergrößerte Darstellung des Schlosses von Fig. 2 oder Fig. 3 zur Verdeutlichung einer Einstellung mit einer Todpunkt-Stellung;
- Fig. 5: einen Schnitt entlang der Linie A-A von Fig. 3;
- Fig. 6: eine teilweise weggeschnittene Draufsicht auf eine erfindungsgemäße Ausführungsform für das Schloss von Fig. 1; und
- Fig. 7: eine Seitenansicht auf die erfindungsgemäße Ausführungsform des Schlosses.

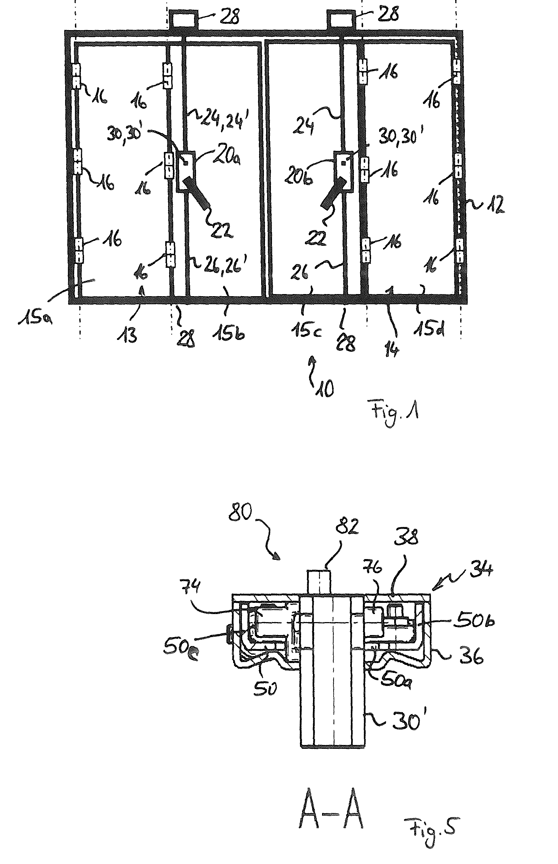

In Fig. 1 ist ein schematisches Beispiel für ein Falttor 10 mit einer Zarge 12 und zwei Falttorflügeln 13 und 14 dargestellt. Die Falttorflügel 13, 14 sind mittels Türbänder 16 an der Zarge 12 angelenkt. Die Falttorflügel 13, 14 haben jeweils mehrere Flügelelemente 15a, 15b, 15c, 15d, die mittels weiterer Türbänder 16' aneinander angelenkt sind. Zum Verriegeln weist jeder der Falttorflügel 13, 14 ein Schloss 20a, 20b auf.

Jedes Schloss 20a, 20b ist mittels eines Drückers 22 betätigbar. Bei Verschwenken des Drückers 22 werden erste Riegelstangen, nämlich obere Riegelstangen 24, 24' und zweite Riegelstangen, nämlich untere Riegelstangen 26, 26' in ihrer Längsrichtung verschoben, so dass sie in entsprechende an der Zarge 12 bzw. am Boden oben und unten angebrachte Gegenlagereinrichtungen 28 eingreifen. Die Bewegungsmöglichkeit der Riegelstangen 24, 26, 24', 26' über die Drücker 22 lässt sich am Schloss 20a, 20b wahlweise mittels eines Schließzylinders 30, 30' von außen und manuell von innen versperren und entsperren.

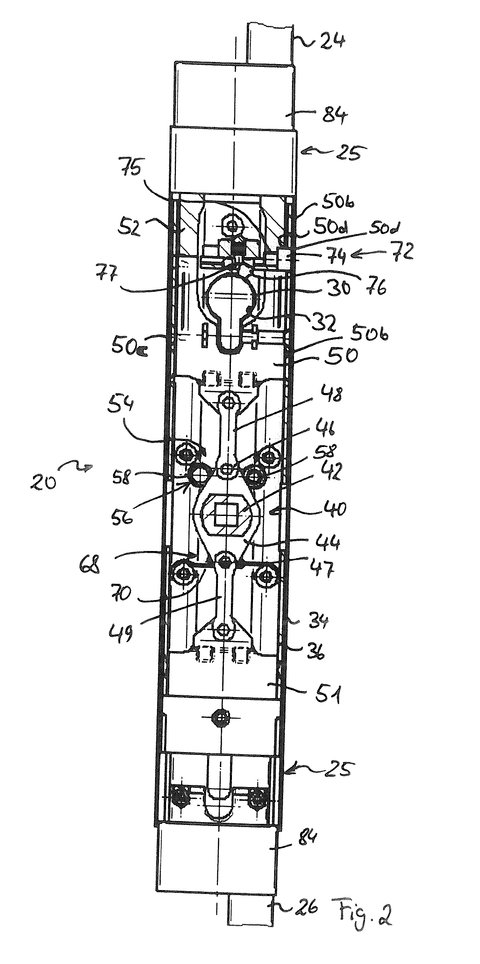

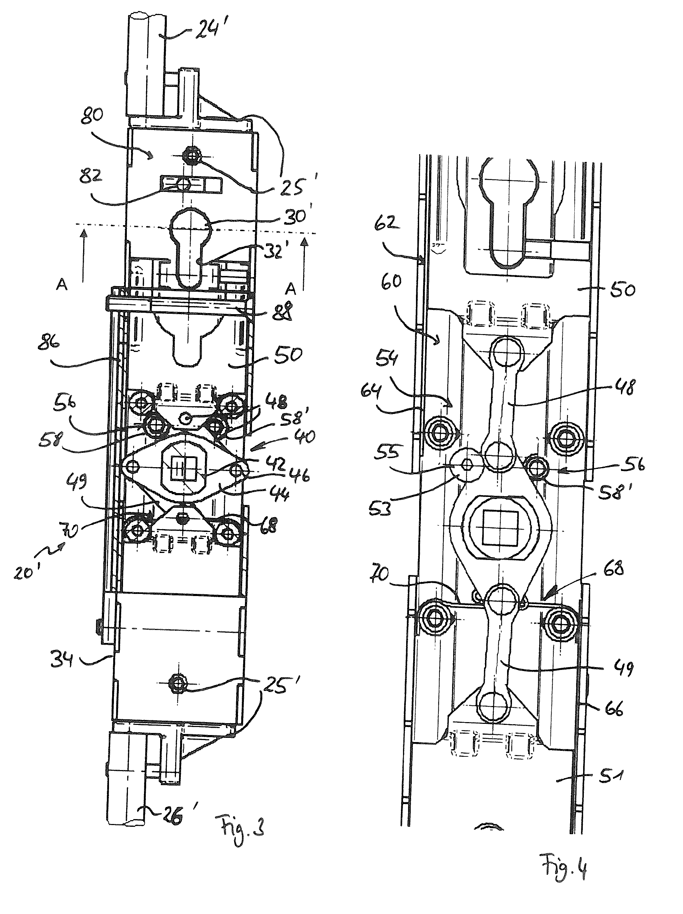

In den Fig. 2 und 3 sind zwei unterschiedliche Ausführungsformen von Schlössern 20, 20' gezeigt, die sich im Wesentlichen durch anders geformte Aufnahmeöffnungen 32, 32' zur Aufnahme unterschiedlicher Schließzylindertypen sowie durch die Verwendung unterschiedlicher Adapter für unterschiedlich geformte Riegelstangen 24, 26 unterschieden.

Beispielsweise ist die Aufnahmeöffnung 32 an sogenannte Kaba-Schließzylinder 30 -Schließzylinder mit größerem runden Schlüsselaufnahmekörper, wie sie speziell von der Fa. Kaba auf dem Markt angeboten werden - angepasst, während die Aufnahmeöffnung 32' für sogenannte PZ-Schließzylinder 33' - "PZ" für Profilzylinder, dies sind genormte Schließzylinder - angepasst.

Bei dem Schloss 20 gemäß der ersten Ausführungsform sind Adapter 25 für Riegelstangen 24, 26 mit rundem Querschnittsprofil vorgesehen, während bei dem Schloss 20' gemäß der zweiten Ausführungsform Adapter 25' für Riegelstangen 24, 26' mit eckigem Querschnitt (z.B. Vierkantprofil) vorgesehen sind. Es ist offensichtlich, dass beide Adapter 25, 25' im Prinzp an jedem der beiden Schlösser 20, 20' verwendbar sind.

Ansonsten sind die Schlösser 20, 20' der Fig. 2 und 3 gleich aufgebaut. Die folgende Beschreibung gilt daher sowohl für das Schloss 20 gemäß Fig. 2 als auch für das Schloss 20' gemäß Fig. 3.

Beide in Fig. 2 und 3 gezeigten Schlösser 20, 20' sind sowohl rechts als auch links verwendbar; beide Schlösser 20, 20' können daher sowohl zum Bilden des Schlosses 20a an dem linken Falttorflügel 13 von Fig. 1 als auch zum Bilden des Schlosses 20b an dem rechten Falttorflügel 14 von Fig. 1 verwendet werden. Insbesondere sind die Schlösser 20, 20' derart einstellbar, dass die Riegelstangen entweder bei einer Verschwenkung des Drückers 22 in Uhrzeigersinn entriegelt und bei Verschwenkung des Drückers in Gegenuhrzeigersinn verriegelt werden oder umgekehrt bei einer Verschwenkung des Drückers gegen den Uhrzeigersinn entriegelt und bei Verschwenkung des Drückers in Uhrzeigersinn verriegelt werden.

Ebenso lässt sich die Schließbewegungsrichtung bei Schlüsselbetätigung einstellen.

Im Folgenden wird der Aufbau der Schlösser 20, 20' nun anhand der Darstellungen in den Fig. 2 und 3 näher erläutert. Dabei ist in Fig. 3 das Schloss 20' in der Entriegelungsstellung - Riegelstangen 24, 26 sind zurückgezogen - dargestellt und in Fig. 4 ist das Schloss 20 in der Verriegelungsstellung - Riegelstangen 24, 26 sind ausgefahren - dargestellt.

Das Schloss 20, 20' weist ein Gehäuse 34 auf. Das Gehäuse 34 weist einen geprägten U-förmigen Gehäusekörper 36 und einen Gehäusedeckel 38 auf. In dem länglichen quaderförmigen Gehäuse 34 ist in einem mittleren Bereich eine Drückeraufnahmeeinrichtung 40 drehbar gelagert. Die Drückeraufnahmeeinrichtung 40 weist eine Schlossnuss 42 mit einer Vierkantöffnung für eine (nicht dargestellte) Vierkantwelle des Drückers 22 und eine Anschlusseinrichtung 44 auf. Die Anschlusseinrichtung 44 ist einstellbar drehfest mit der Schlossnuss 42 verbunden und weist an zwei Stellen, die in der in Fig. 2 dargestellten Verriegelungsstellung oder Ruhestellung vertikal oben und unten an der Schlossnuss 42 angeordnet sind und sich diametral gegenüber liegen, Anschlüsse 46, 47 auf, an der Hebelelemente, hier in Form je eines stangenartigen Hebels 48, 49, schwenkbar angelenkt sind.

An dem anderen Ende des hier oben angeordneten ersten Hebels 48 ist ein erster Schieber 50 schwenkbar angelenkt. An dem hier unten angeordneten zweiten Hebel 49 ist ein zweiter Schieber 51 schwenkbar angelenkt.

Die beiden Schieber 50, 51 sind derart verschiebbar in dem Gehäuse 34 gelagert, dass sie in Längsrichtung des Gehäuses 34 auf die Drückeraufnahmeeinrichtung 40 zu und von ihr weg verschiebbar sind. Bei der dargestellten vertikalen Ausrichtung des Schlosses 20, 20', 20a, 20b sind somit die beiden Schieber 50, 51 nach oben und nach unten in vertikaler Richtung verschiebbar.

Durch die Anlenkung an die Hebel 48, 49 sind die Schieber 50, 51 an die Drückeraufnahmeeinrichtung 40 und somit auch miteinander gekoppelt. Wird die Schlossnuss 42 aus der in Fig. 2 dargestellten Stellung in die in Fig. 3 dargestellte Stellung verdreht, werden über die sich dann entsprechend verschwenkenden Hebel 48, 49 die Schieber 50, 51 aufeinander zu und nach innen auf die Drückeraufnahmeeinrichtung 40 zu geschoben. Aufgrund der starren Anlenkung über die starren Stangen der Hebel 48, 49 reicht die Festsetzung eines der Schieber 50, 51 zur Festsetzung beider Schieber 50, 51 der gesamten Riegelbetätigungseinheit aus.

Wie insbesondere aus Fig. 5 ersichtlich, ist der erste Schieber 50 - dies ist hier der obere Schieber -hierzu U-förmig mit einem U-Steg 50a und zwei U-Schenkeln 50b und 50c ausgebildet. Ein Sperrelement ist zum Sperren der Bewegung dieses ersten Schiebers zwecks Sperren des Schlosses 20, 20' vorgesehen. Als Sperrelement ist in den dargestellten Ausführungsbeispielen ein Querschieber 52 vorgesehen, der sich quer zu der Bewegungsrichtung des ersten Schiebers 50 innerhalb des Gehäuses 34 geführt verschieben lässt.

Es wird nun wieder auf die Fig. 2 und 3 Bezug genommen. Der Querschieber 52 ist im oberen Bereich des Gehäuses 34 vorgesehen. In diesem Bereich ist in dem Gehäusekörper 36 auch jeweils die Aufnahmeöffnung 32, 32' vorgesehen. Der jeweils in den Aufnahmeöffnungen aufgenommene Schließzylinder 30, 30', sperrt den ersten Schieber 50 an einem der hervorstehenden U-Schenkel 50a, 50b. Bei den dargestellten Ausführungsbeispielen erfolgt dies mittelbar über das hier als Querschieber 52 ausgebildete Sperrelement.

Dadurch wird die Bewegung beider Schieber 50, 51 und damit die Bewegung der an die Schieber 50, 51 angelenkten Riegelstangen 24, 26 blockiert. Hierauf wird weiter unten noch näher eingegangen.

Wie am besten aus Fig. 4 ersichtlich, wirken die zwischen der Schlossnuss 42 und den Schiebern 50, 51 angeordneten Hebel 48, 49 wie Kniehebel. Bei einer in Fig. 4 dargestellten möglichen und bevorzugten Einstellung des Schlosses 20, 20' werden die Hebel 48, 49 durch einen Anschlag 53 etwas hinter dem Todpunkt gesperrt. Der Anschlag 53 lässt eine Drehung der Drückeranschlusseinrichtung 40 bis etwas über den Todpunkt zu, verhindert aber eine weitere Drehung. Versucht man nun, die an den Schiebern 50, 51 befestigten Riegelstangen 24, 26, 24', 26' durch Druck an den Riegelstangen 24, 26 zurückzuschieben, um das Tor 10 ohne Betätigung des Schlosses 20, 20' zu öffnen, so werden die Hebel 48, 49 nur weiter gegen den Anschlag 53 bewegt. Der Anschlag 53 nimmt die entsprechenden Druckkräfte unmittelbar auf kurzem Wege auf, so dass die Schlossmechanik wenig belastet wird. Somit setzt das Schloss 20, 20' Einbruch- und Manipulationsversuchen einen hohen und stabilen Widerstand entgegen.

Das Schloss 20, 20' weist eine Anpasseinrichtung 54 zur Anpassung an eine wahlweise Rechts-/Linksverwendung auf. Die Anpasseinrichtung 54 weist zunächst eine Anschlageinstelleinrichtung 56 zum Einstellen des Anschlags 53 auf. Der Anschlag 53 ist dadurch zur wahlweisen Rechts-/Linksverwendbarkeit einstellbar. Bei dem dargestellten Ausführungsbeispiel weist das Gehäuse 34 hierzu verschiedene Anschlagbefestigungseinrichtungen zur wahlweisen Positionierung des Anschlags 53 auf.

In dem dargestellten Beispiel wird der Anschlag 53 durch eine Anschlagschraube 55 gebildet. Als Anschlagbefestigungseinrichtungen sind bei dem Ausführungsbeispiel zwei Gewindebohrungen 58, 58' in einer Grundplatte des Gehäusegrundkörpers 36 vorgesehen, in die die Anschlagschraube 55 zum Bilden des Anschlags 53 einschraubbar ist.

Weiter weist die Anpasseinrichtung 54 eine einstellbare Sicherungseinrichtung 60 auf zum Sicherstellen, dass der Todpunkt beim Verriegeln erreicht und beibehalten wird. Die Sicherungseinrichtung 60 weist in dem dargestellten Ausführungsbeispiel eine einstellbare Führung 62 für die beiden Schieber 50, 51 auf. Durch die einstellbare Führung 62 können die Schieber 50, 51 etwas zur Längsmittelebene seitlich versetzt geführt werden. Dadurch sind die Hebel 48, 49 bereits etwas vorgeschwenkt, so dass die Todpunktstellung auf der jeweiligen Seite sicher erreicht wird.

Zum Bilden der einstellbaren Führung 62 sind bei dem Schloss 20, 20', siehe Fig. 4, ein erstes Gleitblech 64 sowie ein zweites Gleitblech 66 vorgesehen. Das erste Gleitblech 64 ist etwas länger als das zweite Gleitblech 66. Das erste Gleitblech 64 ist auf der Seite, auf der sich auch der Anschlag 53 befindet, zwischen den ersten Schieber 50 und den U-Schenkel des Gehäusegrundkörpers 36 auf dieser Seite geschoben. Das zweite Gleitblech 66 ist diametral dem Anschlag gegenüber liegend zwischen den zweiten Schieber 51 und dem anderen U-Schenkel des Gehäusegrundkörper 36 geschoben.

Es kann eine Rasteinrichtung 68 vorgesehen sein, um die Drückeraufnahmeeinrichtung 40 in der gewünschten Stellung kurz hinter dem Todpunkt zu halten. Die Rasteinrichtung 68 weist in den in den Fig. 2 und 3 dargestellten Ausführungsbeispielen eine Rastfeder 70 auf, die die Schlossnuss 42 und damit den Drücker 22 in den gewünschten Stellungen hält.

An den freien Enden der Schieber 50, 51 sind die jeweiligen Adapter 25, 25' zur Befestigung der Riegelstangen 24, 26, 24', 26' an den Schiebern 50, 51 vorgesehen. Die Adapter 25, 25' sind bei dem dargestellten Beispiel mittels Nieten befestigt, es ist aber auch jede andere geeignete Befestigung denkbar.

Das Schloss 20, 20' weist weiter eine Schließrichtungseinstelleinrichtung 72 zur Einstellung der Schlüsseldrehrichtung auf.

Mit der Schließrichtungseinstelleinrichtung 72 lässt sich wählbar einstellen, welche der beiden Schlüsseldrehrichtungen zum Versperren des Schlosses 20, 20' dient, wobei die andere Schlüsseldrehrichtung dann zum Entsperren dient.

Bei den dargestellten Ausführungsbeispielen weist die Schließrichtungseinstelleinrichtung 72, wie am besten in Fig. 2 erkennbar ist, als Einstellelement eine Sperrschraube 74 zur wahlweisen Anbringung an dem Querschieber 52 auf. Der Querschieber 52 ist hierzu mit einer längs zu seiner Verschieberichtung verlaufenden Gewindebohrung 75 versehen. Je nach dem, in welches Ende der Gewindebohrung 75 die Sperrschraube 74 eingeschraubt wird, wird entweder ein erstes in eine erste der beiden Verschieberichtungsmöglichkeiten weisendes Ende des Querschiebers 52 verlängert oder das entgegengerichtete zweite Ende. In Fig. 2 ist zum Beispiel das in der Zeichnung nach rechts weisende Ende des Querschiebers 52 durch die Sperrschraube 74 verlängert.

Der erste Schieber 50 weist an seinen U-Schenkeln 50b, 50c an entsprechenden Stellen Blockieröffnungen 50d auf, die durch den Kopf der in ein das jeweilige Ende der Gewindebohrung 75 eingeschraubten Sperrschraube 74 durchgriffen werden können. Hierdurch wird der erste Schieber 50 dann blockiert. Je nachdem, an welchem der beiden in Verschieberichtung gerichteten Enden die Sperrschraube 74 angebracht ist, führt somit eine Verschiebung des Querschiebers 52 in die eine oder in die andere Richtung zum Versperren. Der Querschieber 52 hat an seiner Unterseite eine Erfassungseinrichtung 77, hier in Form einer Ausnehmung, die durch den mittels des Schlüssel drehbaren Vorsprung 76 des Schließzylinders 33, 33' erfassbar ist, um bei Drehung des Schlüssels den Querschieber 52 zu verschieben. Durch wahlweise Anbringung der Sperrschraube 74 rechts oder - wie dargestellt - links in Fig. 2 führt somit eine Drehung des Schlüssels entgegen den Uhrzeigersinn oder - wie dargestellt - in Uhrzeigersinn zu einem Versperren des Schlosses 20, 20'.

Lässt man die Sperrschraube 74 ganz weg, dann führt weder ein Verschieben des Querschiebers in die eine noch in die andere Richtung zu einem Versperren des Schlosses 20, 20'. Bei solch einer Einstellung wird das Schloss 20, 20' allein zur Drückerbetätigung verwendet.

In einer nicht näher dargestellten weiteren möglichen Ausführungsform ist das Einstellelement der Schließrichtungseinstelleinrichtung der Erfassungseinrichtung 77 des Querschiebers 52 zugeordnet, an der der Vorsprung 76 den Querschieber erfasst. In einem solchen Fall dient das Einstellelement zum Verstellen der Lage einer solchen Erfassungseinrichtung 77 relativ zum Querschieber 52 oder genauer relativ zu dessen Eingriffsenden. Dadurch lässt sich ein vergleichbarer Effekt wie bei der voranstehenden Ausführung erzielen.

Wie am besten aus Fig. 4 ersichtlich, ist weiter eine manuelle Betätigungseinrichtung 80 zum Öffnen des versperrten Schlosses 20, 20' auch ohne Schlüssel vom Inneren des durch das Falttor 10 zu verschließenden Raumes aus vorgesehen. Eine solche manuelle Betätigungsmöglichkeit ist insbesondere aus Sicherheitsgründen für Garagen vorgesehen. Bei dem hier dargestellten Schloss 20, 20' ist die Betätigungseinrichtung 80 an dem Sperrelement, d.h. hier dem Querschieber 52 vorgesehen. Die Betätigungseinrichtung 80 weist als Betätigungselement einen Stift 82 auf, der fest an dem Querschieber 52 befestigt ist und der durch ein Langloch (nicht dargestellt) aus dem Gehäuse 34 herausragt. Mittels des Stifts 84 kann ein Benutzer den Querschieber 52 verschieben und so das Schloss 20, 20' von innen entsperren oder versperren, ohne einen Schlüssel oder ein Werkzeug zu benötigen.

Im Folgenden werden insbesondere anhand der Darstellungen in den Fig. 2, 3 und 5 die möglichen Befestigungen des Gehäuses 34 in oder an Rahmenprofilen eines Rahmens eines Flügelelements 15a, 15b, 15c, 15d näher erläutert. In Fig. 1 ist zu Darstellungszwecken das Schloss 20a, 20b übergroß dargestellt, wobei die Anbringung des Schlosses 20a, 20b nicht der bevorzugten Anbringung entspricht. Um das Schloss 20a, 20b möglichst fest mit dem jeweiligen Flügelelement 15a-15d zu verbinden, ist es bevorzugt, das Schloss an einem tragenden Rahmen des Flügelelements anzubringen. Beispielsweise weisen die Flügelelemente Rahmen aus Rahmenprofilen auf, die als Rohrprofile oder sonstige Hohlprofile besonders stabil ausgebildet sind. Das hier dargestellte Schloss 20, 20' kann unmittelbar in oder an einem solchen Rahmenprofil eventuell auch mit im Schließzustand verdeckten Befestigungselementen oder zumindest mit optisch sehr unauffälligen Befestigungselementen befestigt werden.

Fig. 2 zeigt eine Befestigung des Gehäusekörpers 36 auf dem nicht dargestellten Rahmenprofil mit noch nicht montiertem Gehäusedeckel 38. Hierzu sind an beiden kurzen Enden des Gehäuses 34, die im bestimmungsgemäßen Gebrauch nach oben und nach unten weisen, eine U-förmige Abdeckung 84 vorgesehen, um auch bei ausgefahrenen Riegelstangen 24, 26, 24', 26' die Adapter 25, 25' zu überdecken.

Bei einer bevorzugten Ausgestaltung sind sowohl das Schloss 20, 20' als auch die Riegelstangen 24, 26, 24', 26' innerhalb des Rahmenprofils untergebracht. In einem solchen Fall kann das Schloss 20, 20' z.B. von oben im Rahmenprofil befestigt werden. Fig. 3 zeigt eine alternative Befestigungsart innerhalb des Rahmenprofils. Hierzu ist im Rahmenprofil ein Aufnahmeblech 86 vorgesehen. Das Schloss 20, 20' kann dann von der vorderen Stirnseite des Falttores aus - ählich wie dies bei Schlössern normaler Zimmertüren heutzutage üblich ist -in eine Art Schlosstasche eingeschoben und dort mittels horizontal angeordneter Schrauben 88 an dem Aufnahmeblech 86 verschraubt werden.

Das Ensemble der beiden Schlösser 20, 20' bildet ein Schlosssortiment, aus dem je nach zu verwendendem Schließzylinder 30, 30' das passende ausgewählt werden kann. Die Schlösser 20, 20' können in Gleichteilestrategie kostengünstig hergestellt werden, wobei sich lediglich die Ausformung der Ausnehmung unterscheidet. Dies kann einfach durch ein auswechselbares Werkzeug innerhalb des Produktionsbandes geschehen.

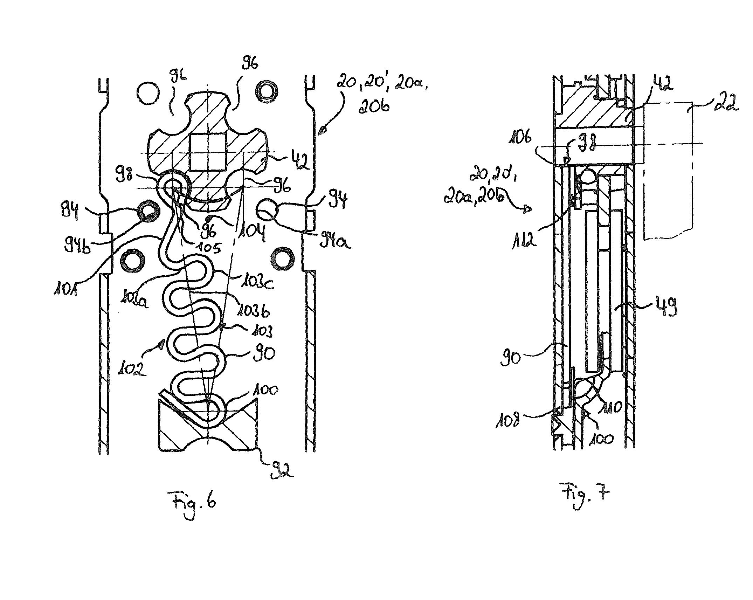

Während die in den Fig. 2 bis 5 rein zu Erläuterungszwecken beschriebenen und nicht von der Erfindung umfassten Ausführungsformen durch ihren Aufbau relativ viel Platz benötigen, wird in den Fig. 6 und 7 eine erfindungsgemäße Ausführungsform beschrieben, die durch ihren Aufbau vergleichsweise platzsparend ausgebildet ist und zudem noch Rückstellkräfte für die Schlossnuss 42 bereitstellt. Die Ausführungsform des erfindungsgemäßen Schlosses, welche in den Fig. 6 und 7 dargestellt ist, entspricht in den meisten Bauelementen den zuvor beschriebenen Ausführungsformen. Entsprechende Teile sind mit entsprechenden Bezugszeichen versehen und zur Beschreibung des Aufbaus und der Funktion wird auf die obigen Ausführungen verwiesen. Auch die erfindungsgemäße Ausführung kann zur Aufnahme unterschiedlicher Schließzylinder unterschiedlich ausgebildet sein.

Die erfindungsgemäße Ausführung unterscheidet sich im Wesentlichen von den Ausführungen der Fig. 2 bis 5 durch eine Modifikation der Rastvorrichtung 68, die durch Verwendung einer speziellen Feder als Vorspannelement und/oder Rastfeder 70 einen besonders kompakten und vorteilhaften Aufbau des Schlosses 20, 20', 20a, 20b ermöglicht. Auch sind die Schlossnuss 42 und Federsitze entsprechend angepasst.

Der sich von dem Aufbau der Schlösser der Fig. 2 bis 5 unterscheidende Aufbau des Schlosses gemäß der erfindungsgemäßen Ausführungsform gemäß der Fig. 6 und 7 wird im Folgenden näher erläutert:

Fig. 6 zeigt die erfindungsgemäße Ausführungsform des Schlosses 20, 20', 20a, 20b, die eine platzsparende Rast- und Rückstelleinrichtung 89 zum Bilden der Rasteinrichtung 68 aufweist.

Das Schloss 20, 20' weist die Schlossnuss 42, eine mechanische Feder 90, ein Abstützelement 92 und Begrenzungseinrichtungen 94 auf.

Die Schlossnuss 42 ist in der erfindungsgemäßen Ausführungsform mit mehreren, insbesondere vier, Ausnehmungen 96 gebildet, die regelmäßig verteilt am äußeren Umfangsrand der Schlossnuss 42 angeordnet sind. Die mechanische Feder 90 weist einen ersten Endbereich 97 als bewegliches Ende 98 und einen zweiten Endbereich 99 als ortsfestes Ende 100 auf. Mit dem beweglichen Ende 98 greift die mechanische Feder 90 in eine der Ausnehmungen 96 der Schlossnuss 42. Das ortsfeste Ende 100 der mechanischen Feder 90 stützt sich in einer taschenförmigen Ausnehmung des Abstützelementes 92 ab. Die mechanische Feder 90 weist sowohl an dem beweglichen Ende 98 als auch an dem ortsfesten Ende 100 jeweils eine Schlaufenumbiegung auf, mit der die mechanische Feder 90 in der Ausnehmung 96 bzw. in dem Abstützelement 92 aufgenommen ist.

Die mechanische Feder 90 weist einen mäanderförmigen verformbaren Bereich 102 auf, der mehrere Mäanderschlingen 103 aufweist. Die Feder 90 ist als Flachfeder ausgebildet, wobei die Mäanderschlingen 103 in einer Ebene ausgerichtet sind und sich auch nur in einer Ebene bewegen. Dadurch wird der Aufbau des Rast- und Rückstellelement besonders flach und platzsparend, wobei trotzdem auch große Kräfte über die Feder 90 übertragen werden können. Der mäanderförmige verformbare Bereich 102 weist wenigstens zwei, insbesondere mehr als zwei, Mäanderschlingen 103 auf. Die Mäanderschlingen 103 weisen einen ersten Wendepunkt 103a, einen zweiten Wendepunkt 103b und einen Scheitelpunkt 103c dazwischen auf. Der erste Wendepunkt 103a einer Mäanderschlinge 103 bildet gleichzeitig den zweiten Wendepunkt 103b der benachbarten Mäanderschlinge 103; somit laufen die Mäanderschlingen 103 einstückig ineinander über. Durch die Ausbildung von gemeinsamen Wendepunkten sind die Mäanderschlingen vorteilhaft ansatzlos miteinander verbunden. Wird durch Einbringen einer Kraft die Feder 90 gestaucht, bewegen sich die Wendepunkte 103a, 103b aufeinander zu.

Wird durch den Drücker 22 die Schlossnuss 42 betätigt, wird die mechanische Feder 90 entlang des mäanderförmigen verformbaren Bereiches 102 gestaucht. Durch die Stauchung nimmt die mechanische Feder 90 potentielle Energie auf. Die Drehung in die entgegengesetzte Richtung wird durch die Begrenzungseinrichtung 94 mit Raststellungen 94a, 94b verhindert.

Zwischen der Schlaufenumbiegung des beweglichen Endes 98 und dem mäanderförmigen verformbaren Bereich 102 befindet sich ein geradliniger Übergangsbereich 101. Dieser bewegt sich bei der Stauchung der Feder 90 auf den mäanderförmigen verformbaren Bereich 102 zu und überträgt so die eingebrachte kinetische Energie auf die Feder 90. Die Feder ist weiter zwischen dem geradlinigen Übergangsbereich 101 und dem ersten Endbereich 97 abgebogen ausgebildet und bildet eine Abbiegung 105. Dadurch wird die Kraft auf einem optimalen Kraftvektor auf den mäanderförmigen verformbaren Bereich 102 übertragen, ohne eine Materialermüdung im geradlinigen Übergangsbereich 101 zur Folge zu haben.

Bei der Drehung der Schlossnuss 42 durch den Drücker 22 gegen den Uhrzeigersinn von Fig. 6 wird die mechanische Feder 90 zunächst gestaucht, bis sie in dem Todpunkt 104 einen maximalen Stauchungsgrad erreicht hat. Bei weiterer Drehung des Drückers 22 gegen den Uhrzeigersinn wird die Feder 70 weiter über den Todpunkt 104 hinaus geführt und wieder entspannt, bis sie an einem Anschlag der Begrenzungseinrichtung 94 anschlägt und so die erste Raststellung 94a der Rast- und Rückstelleinrichtung 89 bildet.

Bei Drehung der Schlossnuss 42 im Uhrzeigersinn wird die mechanische Feder 90 bis zum Todpunkt 104 hin gestaucht und darüber hinaus wieder entspannt, bis sie an einem weiteren Anschlag der Begrenzungseinrichtung anschlägt und so die zweite Raststellung 94b der Rast- und Rückstelleinrichtung 89 bildet.

Über die Raststellungen 94a, 94b kann die Feder 90 nicht gedreht werden, da der geradlinige Übergangsbereich 101 dann an die Begrenzungseinrichtungen 94 schlägt und von diesen arretiert wird. Da der geradlinige Übergangsbereich aber die Abbiegung 105 aufweist, ist genug Platz vorhanden, um die Schlaufenumbiegung an der Begrenzungseinrichtung 94 vorbeizuführen.

Wird der Drücker 22 losgelassen, wenn sich die Feder 90 in einer Stellung zwischen dem Todpunkt 104 und einer der Raststellungen 94a, 94b befindet, sorgen die Rückstellkräfte dafür, dass die Feder 90 und damit der Drücker 22 in der jeweiligen Raststellung einrastet.

Fig. 7 zeigt eine Seitenansicht der erfindungsgemäßen Ausführungsform des Schlosses 20, 20', 20a, 20b.

Die mechanische Feder 90 wird in Taschen 106, 108 aufgenommen und an ihrem ortsfesten Ende 100 von einer Abdeckplatte 110 gehalten. An dem beweglichen Ende 98 wird die mechanische Feder 90 durch einen Nussteller 112 in ihrer Position gehalten. Wenn die mechanische Feder 90 durch Betätigung des Drückers 22 nun zwischen den beiden Rastpositionen der Schlossnuss 42 hin und her bewegt wird, kann sie, da durch die Abdeckplatte 110 und den Nussteller 112 gehalten, nicht aus ihrer vorbestimmten Position entweichen.

Da die mechanische Feder 90 einen flachen Aufbau als Flachfeder aufweist, kann der Aufbau des Schlosses 20, 20' besonders platzsparend realisiert werden.

Je nach dem, welche Kraft von der Feder ausgeübt werden soll, bzw. mit welcher Kraft die Feder Widerstand gegen die Betätigung des Drückers 22 leisten soll, kann der Querschnitt der Flachfeder ausgestaltet sein. Ist eine eher kleine Federkonstante gewünscht, ist es von Vorteil, wenn die Feder senkrecht zur Ebene der Mäanderschlingen 103 eine größere Komponente aufweist als in der Ebene der Mäanderschlingen 103. Ist eine große Federkonstante gewünscht, sind die Verhältnisse vorzugsweise umgekehrt.

Der Querschnitt der Feder kann jedoch auch quadratisch oder rund oder in weiteren beliebigen Formen gewählt sein.

### Bezugszeichenliste:

- 10: Falttor
- 12: Zarge
- 13: linker Falttorflügel
- 14: rechter Falttorflügel
- 15a: Flügelelement
- 15b: Flügelelement
- 15c: Flügelelement
- 15d: Flügelelement
- 16: Türband
- 16': Türband
- 20a: linkes Schloss
- 20b: rechtes Schloss
- 20: Schloss
- 20': Schloss
- 22: Drücker
- 24: obere Riegelstange
- 26: untere Riegelstange
- 30: KABA-Schließzylinder
- 30': PZ-Schließzylinder
- 32: Aufnahmeöffnung für Kaba-Zylinder
- 32': Aufnahmeöffnung für PZ-Zylinder
- 34: Gehäuse
- 36: Gehäusekörper
- 38: Gehäusedeckel
- 40: Drückeraufnahmeeinrichtung
- 42: Schlossnuss
- 44: Anschlusseinrichtung
- 46: erster Anschluss
- 47: zweiter Anschluss
- 48: erster Hebel (Hebelelement)
- 49: zweiter Hebel (Hebelelement)
- 50: erster Schieber
- 50a: U-Steg
- 50b: U-Schenkel
- 50c: U-Schenkel
- 50d: Blockieröffnung
- 51: zweiter Schieber
- 52: Querschieber (Sperrelement)
- 53: Anschlag
- 54: Anpasseinrichtung
- 55: Anschlagschraube
- 56: Anschlageinstelleinrichtung
- 58: Gewindebohrung (Anschlagbefestigungseinrichtung)
- 58': Gewindebohrung (Anschlagbefestigungseinrichtung)
- 60: Sicherungseinrichtung
- 62: einstellbare Führung
- 64: erstes Gleitblech
- 66: zweites Gleitblech
- 68: Rasteinrichtung
- 70: Rastfeder
- 72: Schließrichtungseinstelleinrichtung
- 74: Sperrschraube
- 75: Gewindebohrung
- 76: bewegbarer Vorsprung des Schließzylinders
- 77: Erfassungseinrichtung (Ausnehmung)
- 80: Betätigungseinrichtung
- 82: Stift
- 84: Abdeckung
- 86: Aufnahmeblech
- 88: Schraube
- 89: Rast- und Rückstelleinrichtung
- 90: mechanische Feder
- 92: Abstützelement
- 94: Begrenzungseinrichtungen
- 94a: erste Raststellung
- 94b: zweite Raststellung
- 96: Ausnehmung
- 97: erster Endbereich
- 98: bewegliches Ende
- 99: zweiter Endbereich
- 100: ortsfestes Ende
- 101: geradliniger Übergangsbereich
- 102: mäanderförmiger verformbarer Bereich
- 103: Mäanderschlinge
- 103a: erster Wendepunkt
- 103b: zweiter Wendepunkt
- 103c: Scheitelpunkt
- 104: Todpunkt
- 105: Abbiegung
- 106: erste Tasche
- 108: zweite Tasche
- 110: Abdeckplatte
- 112: Nussteller

## Patentansprüche

1. Mechanische Feder (90), ausgebildet als Vorspannelement für ein Schloss (20, 20', 20a, 20b), mit einem elastisch verformbaren Bereich (102) zur Aufnahme und/oder Abgabe von kinetischer Energie und/oder zur Speicherung von potentieller Energie,
**dadurch gekennzeichnet, dass** der elastisch verformbare Bereich (102) mäanderförmig ausgebildet ist.

2. Feder (90) nach Anspruch 1,
**dadurch gekennzeichnet, dass** der mäanderförmige verformbare Bereich (102) wenigstens zwei mäanderförmige Schlingen (103) aufweist, die in einer Ebene ausgerichtet sind, wobei die Schlingen(103) einen ersten Wendepunkt (1 03a), einen zweiten Wendepunkt (1 03b) und einen Scheitelpunkt (1 03c) dazwischen aufweisen.

3. Feder (90) nach einem der voranstehenden Ansprüche,
**gekennzeichnet durch** eine Ausbildung als Flachfeder.

4. Feder (90) nach einem der voranstehenden Ansprüche,
**dadurch gekennzeichnet, dass** ein erster Endbereich (97) zum Abstützen der Feder (90) und ein zweiter Endbereich (99) zum Abstützen der Feder (90) vorgesehen sind, welche jeweils wenigstens eine Schlaufenumbiegung aufweisen.

5. Feder (90) nach einem der voranstehenden Ansprüche,
**dadurch gekennzeichnet,**
**dass** zwischen wenigstens einem Endbereich der Feder (90) und dem mänderförmigen Bereich (102) ein geradliniger Übergangsbereich (101) vorgesehen ist.

6. Feder (90) nach Anspruch 5,
**dadurch gekennzeichnet,**
**dass** die Feder (90) zwischen dem geradlinigen Übergangsbereich 101 und dem zugeordneten Endbereich zur Kraftübertragung abgebogen ausgebildet ist.

7. Rastvorrichtung (68) für ein Betätigungselement eines Schlosses (20, 20', 20a, 20b),
**gekennzeichnet durch** eine Feder (90) nach einem der voranstehenden Ansprüche.

8. Schloss (20, 20', 20a, 20b) für eine Tür oder ein Tor, insbesondere für ein Falttor (10),
**gekennzeichnet durch** eine Feder (90) nach einem der Ansprüche 1 bis 6 zum Vorspannen eines Betätigungselements des Schlosses (20, 20', 20a, 20b) und/oder eine Rastvorrichtung (68) nach Anspruch 7 zum Ermöglichen eines Einrastens des Betätigungselements in wenigstens einer Stellung, insbesondere in wenigstens zwei Stellungen.

9. Schloss (20, 20', 20a, 20b) nach Anspruch 8,
**dadurch gekennzeichnet,**
**dass** das Betätigungselement als drehbare Schlossnuss (42) ausgebildet ist, wobei die Feder (90) sowohl zum Erzeugen von Rückstellkräften als auch zum Erzeugen von Rastkräften für die Schlossnuss (42) dient.

10. Schloss (20, 20', 20a, 20b) nach einem der Ansprüche 8 oder 9,
**dadurch gekennzeichnet,**
**dass** die Feder (90) mit einem ersten Endbereich (97) an der Schlossnuss (42) und mit einem zweiten Endbereich (99) an einem ortsfesten Abstützelement (92) angreift.

11. Schloss (20, 20', 20a, 20b) nach einem der Ansprüche 8 bis 10,
**dadurch gekennzeichnet, dass** wenigstens eine pfannenähnlich ausgebildete Fläche und/oder wenigstens eine taschenförmige Ausnehmung (96) als Federsitz zum Abstützen wenigstens eines Endbereichs der Feder (90) vorgesehen ist.

12. Schloss (20, 20', 20a, 20b) nach einem der Ansprüche 8 bis 11,
**dadurch gekennzeichnet,**
**dass** die Schlossnuss (42) entgegen der Vorspannung der Feder (90) zwischen zwei durch Begrenzungseinrichtungen (94) definierte Endstellungen drehbar ist, zwischen denen die Schlossnuss (42) über einen durch eine maximale Spannung der Feder (90) geschaffenen Todpunkt (104) hinwegzubewegen ist.

13. Schloss (20, 20', 20a, 20b) nach einem der Ansprüche 8 bis 12,
**dadurch gekennzeichnet,**
**dass** die Feder (90) als Druckfeder auf Druck vorgespannt in das Schloss (20, 20', 20a, 20b) eingebaut ist.

14. Falttor (10) mit wenigstens einem Falttorflügel (13, 14), der wenigstens zwei aneinander schwenkbar angelenkte Flügelelemente (15a, 15b, 15c, 15d) aufweist,
**gekennzeichnet durch** ein Schloss (20, 20', 20a, 20b) nach einem der Ansprüche 8 bis 13.
